# FASCICULE DE BREVET EUROPEEN

(11) **EP 1 598 721 B1**
(45) Date de publication et mention de la délivrance du brevet: **18.07.2012**
(21) Numéro de dépôt: 05290745.8
(22) Date de dépôt: 05.04.2005
(51) Int. Cl.: G05D 1/06

(54) **Procédé et dispositif de guidage automatique d'un aéronef, pour un vol au moins en partie à basse altitude**
Verfahren und Vorrichtung zur automatischen Steuerung eines Luftfahrzeug, für einen zumindest teilweise tiefen Flug.
Method and device for automatically guiding an aircraft, for a flight at least partially at low altitude

(30) Priorité: 18.05.2004 FR 0405378
(43) Date de publication de la demande: 23.11.2005
(73) Titulaire: AIRBUS OPERATIONS (SAS), 31060 Toulouse (FR)
(72) Inventeur: Artini, Franck, 31000 Toulouse (FR); Strongman, Edward, 31530 Bretx (FR)
(74) Mandataire: Hauer, Bernard

(56) Documents cités:
- FR-A- 2 689 668
- FR-A- 2 741 320
- FR-A- 2 747 492
- US-A- 5 706 011

## Description

La présente invention concerne un procédé et un dispositif de guidage automatique d'un aéronef, pour un vol au moins en partie à basse altitude.

Bien que non exclusivement, la présente invention s'applique plus particulièrement à un avion de transport militaire qui est généralement très lourd et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer. Une telle trajectoire (ou partie de trajectoire) de vol à basse altitude est donc située à une hauteur de terrain prédéterminée, par exemple 500 pieds (environ 150 mètres).

Par le document FR-2 741 320, on connaît un procédé de guidage d'un aéronef pour un vol à basse altitude. Ce procédé connu prévoit notamment :
- de déterminer une trajectoire de vol à basse altitude qui permet de suivre le terrain survolé par l'aéronef et qui tient notamment compte de prédictions de performances de montée et de descente de l'aéronef ; et
- de guider l'aéronef, automatiquement ou manuellement, suivant cette trajectoire de vol à basse altitude.

La présente invention a pour objet un procédé de guidage automatique d'un aéronef, pour un vol au moins en partie à basse altitude.

Selon l'invention, ledit procédé est remarquable en ce que :
a) on détermine au moins une section de trajectoire LLF correspondant à une partie de trajectoire à basse altitude qui permet de suivre le terrain survolé, qui est susceptible d'être volée par l'aéronef et qui tient compte de prédictions de masse et de vitesse, ainsi que de prédictions de performances de montée et de descente de l'aéronef, ladite section de trajectoire LLF comprenant un point d'entrée et un point de sortie ;
b) on intègre ladite section de trajectoire LLF entre une première partie de trajectoire correspondant à une première phase de vol et une seconde partie de trajectoire correspondant à une seconde phase de vol, en prévoyant respectivement des première et seconde phases de transition ; et
c) on guide automatiquement l'aéronef de manière à ce que, successivement, il capture, suive et quitte ladite section de trajectoire LLF.

Ainsi, grâce à l'invention, on peut faire voler l'aéronef à basse altitude le long de ladite section de trajectoire LLF ("Low Level Flight" en anglais, c'est-à-dire "vol à basse altitude" en français) entre lesdites première et seconde phases de vol qui sont, par exemple, des phases de croisière.

En outre :
- dans une première variante, au moins l'une desdites deux phases de transition (à savoir une phase de capture et une phase de sortie de la section de trajectoire LLF, comme on le verra plus en détail ci-dessous) correspond à une transition à pente constante ; et
- dans une seconde variante, au moins l'une desdites phases de transition correspond à une transition présentant une pluralité de paliers horizontaux (par exemple des contraintes du contrôle aérien).

De façon avantageuse, on met à jour automatiquement un point de capture correspondant au début de ladite première phase de transition (destinée à capturer ladite section de trajectoire LLF), notamment en tenant compte d'un profil du terrain. Ainsi, la phase de capture est toujours sécurisée par rapport au terrain.

Dans un premier mode de réalisation, ladite section de trajectoire LLF (est planifiée et) fait partie d'une trajectoire de vol planifiée, notamment en préparation de mission. Elle peut aussi être modifiée en vol. Il est également possible de la former et de l'insérer au cours d'un vol.

Dans ce cas, dans une première mise en oeuvre, pour engager le suivi de ladite section de trajectoire LLF planifiée, dans un mode managé, on prévient le pilote lorsque l'aéronef se trouve à une distance prédéterminée en amont d'un point de capture correspondant au début de ladite première phase de transition destinée à capturer ladite section de trajectoire LLF, et on l'invite alors à armer un mode de guidage LLF comprenant un mode de capture automatique et un mode de suivi automatique, respectivement, pour capturer et suivre ladite section de trajectoire LLF.

Dans le cadre de la présente invention, on entend par :
- mode managé, un mode de guidage selon lequel l'aéronef est guidé par un dispositif de pilotage automatique qui est commandé automatiquement par un calculateur de gestion de vol. Ce dispositif de pilotage automatique guide automatiquement l'aéronef selon une cible (ou consigne) spécifique calculée automatiquement : angle de montée, angle de descente, trajectoire latérale ; et
- mode sélecté, un mode de guidage selon lequel l'aéronef est guidé par un pilote automatique qui est commandé sur la base de références sélectionnées et entrées manuellement par un pilote, telles que le cap, l'altitude et/ou la vitesse. L'aéronef est alors guidé automatiquement selon une loi comprenant une cible (ou consigne) spécifique : vitesse verticale, altitude, montée, descente, route, cap, ...

De plus, dans le cadre de la présente invention :
- un mode est engagé, lorsqu'il est activé ;
- un mode (non activé) doit être armé pour pouvoir être engagé ; et
- un mode est désengagé, lorsqu'il n'est ni activé, ni engagé.

Dans la première mise en oeuvre précitée, avantageusement :
a) si le pilote arme ledit mode de guidage LLF avant que l'aéronef atteigne ledit point de capture (plus précisément un point de début de transition vers le vol à basse altitude), ledit mode de guidage LLF est engagé automatiquement en ce qui concerne la capture audit point de capture, et en ce qui concerne le suivi lorsque la section de trajectoire LLF est capturée, au point d'entrée de ladite section de trajectoire LLF ; et
b) si le pilote arme ledit mode de guidage LLF à un premier point auxiliaire en aval dudit point de capture, l'engagement dudit mode de guidage LLF est retardé jusqu'audit premier point auxiliaire, auquel il est alors engagé automatiquement en ce qui concerne la capture, et en ce qui concerne le suivi il est engagé automatiquement lorsque la section de trajectoire LLF est capturée, à un second point auxiliaire situé sur ladite section de trajectoire LLF en aval dudit point d'entrée. De préférence, dans ce cas, on indique à un pilote de l'aéronef, par exemple sur un écran de visualisation usuel, ledit second point auxiliaire.

En outre, avantageusement, pour quitter une section de trajectoire LLF, dans un mode managé, on prévient le pilote lorsque l'aéronef se trouve à une distance prédéterminée en amont du point de sortie correspondant à la fin de la section de trajectoire LLF, et on l'invite alors à armer un mode de sortie pour sortir de ladite section de trajectoire LLF, ledit mode de sortie étant engagé automatiquement lorsque l'aéronef arrive audit point de sortie.

Dans une variante particulière, ledit mode de sortie met en oeuvre une sortie à paliers horizontaux et, lorsqu'un palier horizontal de ladite sortie (à paliers horizontaux) est incompatible avec un profil du terrain, c'est-à-dire intercepte ledit profil du terrain, on émet un signal d'alarme.

Dans une seconde mise en oeuvre relative audit premier mode de réalisation (concernant une section de trajectoire LLF planifiée), pour engager le suivi de ladite section de trajectoire LLF planifiée, dans un mode sélecté tel que précité, le pilote choisit une loi de capture.

Avantageusement, on commute automatiquement dudit mode sélecté à un mode managé, lorsque l'aéronef piloté suivant ladite loi de capture intercepte ladite première phase de transition de capture ou ladite section de trajectoire LLF.

En outre, de façon avantageuse, pour quitter une section de trajectoire LLF, dans un mode sélecté, le pilote choisit une loi de sortie.

Par ailleurs, dans un second mode de réalisation, ladite section de trajectoire LLF (appelée "section de trajectoire LLF d'opportunité") est déterminée automatiquement au cours d'un vol de l'aéronef. Cela concerne la situation où aucune section de trajectoire LLF n'est disponible à bord de l'aéronef et où le pilote demande un guidage selon une telle section de trajectoire LLF.

Pour ce faire, selon l'invention :
- ledit point d'entrée de la section de trajectoire LLF est situé à une distance prédéterminée à l'avant de la position actuelle de l'aéronef ; et
- ledit point de sortie de la section de trajectoire LLF est situé à une distance prédéterminée à l'avant dudit point d'entrée.

En outre, avantageusement :
- la pente d'une phase de transition à pente constante correspond à une pente prédéterminée, qui est modifiable par un pilote de l'aéronef ; et
- la vitesse de l'aéronef le long de la section de trajectoire LLF correspond à une vitesse prédéterminée, qui est modifiable par un pilote de l'aéronef.

Dans une variante de réalisation préférée, ladite section de trajectoire LLF et ledit point de sortie sont modifiés en permanence de manière à se déplacer avec l'aéronef, à l'avant de la position dudit aéronef.

Dans ce cas, avantageusement, si ladite section de trajectoire LLF qui se déplace rencontre une section de trajectoire LLF auxiliaire, planifiée notamment en préparation de mission (comme indiqué précédemment), on fusionne ces deux sections de trajectoire LLF pour former une seule section de trajectoire LLF globale.

Dans une mise en oeuvre particulière, ladite première partie de trajectoire est une section de trajectoire LLF auxiliaire, qui a été planifiée en préparation de mission. Dans ce cas, grâce à l'invention, on est en mesure de continuer à faire voler l'aéronef à basse altitude, à la fin d'une section de trajectoire LLF à basse altitude planifiée (à savoir ladite section de trajectoire LLF auxiliaire), en prévoyant une section de trajectoire LLF d'opportunité.

Par ailleurs, de façon avantageuse :
- dans une première variante de mise en oeuvre, lesdites première et seconde parties de trajectoire sont des parties d'une trajectoire de vol planifiée usuelle ;
- dans une seconde variante de mise en oeuvre, au moins l'une desdites première et seconde parties de trajectoire est une trajectoire de capture d'une trajectoire de vol à basse altitude planifiée. Ceci concerne le cas où l'aéronef a été dévié de la trajectoire de vol à basse altitude initialement planifiée, par exemple lorsque l'équipage essayait de suivre à basse altitude une meilleure configuration du terrain (vallée, ...) pour bénéficier d'un masquage plus efficace par ledit terrain, et que l'aéronef doit à présent revenir sur ladite trajectoire de vol à basse altitude planifiée en suivant ladite trajectoire de capture.

La présente invention concerne également un dispositif de guidage automatique d'un aéronef, pour un vol au moins en partie à basse altitude.

Selon l'invention, ledit dispositif est remarquable en ce qu'il comporte :
- des moyens pour déterminer au moins une section de trajectoire LLF correspondant à une partie de trajectoire à basse altitude, qui permet de suivre le terrain survolé, qui est susceptible d'être volée par l'aéronef et qui tient compte de prédictions de masse et de vitesse, ainsi que de prédictions de performances de montée et de descente de l'aéronef ; et
- des moyens pour guider automatiquement l'aéronef de manière à ce que, successivement, il capture, suive et quitte ladite section de trajectoire LLF.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 à 4 sont des graphiques permettant de montrer des aspects généraux de la présente invention.
Les figures 5 et 6 sont des graphiques illustrant la capture et le suivi d'une section de trajectoire LLF planifiée, en mode managé.
Les figures 7 et 8 sont des graphiques illustrant la capture et le suivi d'une section de trajectoire LLF planifiée, en mode sélecté.
Les figures 9 et 10 sont des graphiques illustrant une sortie d'une section de trajectoire LLF planifiée, en mode managé.
La figure 11 est un graphique illustrant une sortie d'une section de trajectoire LLF planifiée, en mode sélecté.
Les figures 12 à 14 sont des graphiques illustrant des particularités relatives à une section de trajectoire LLF d'opportunité.

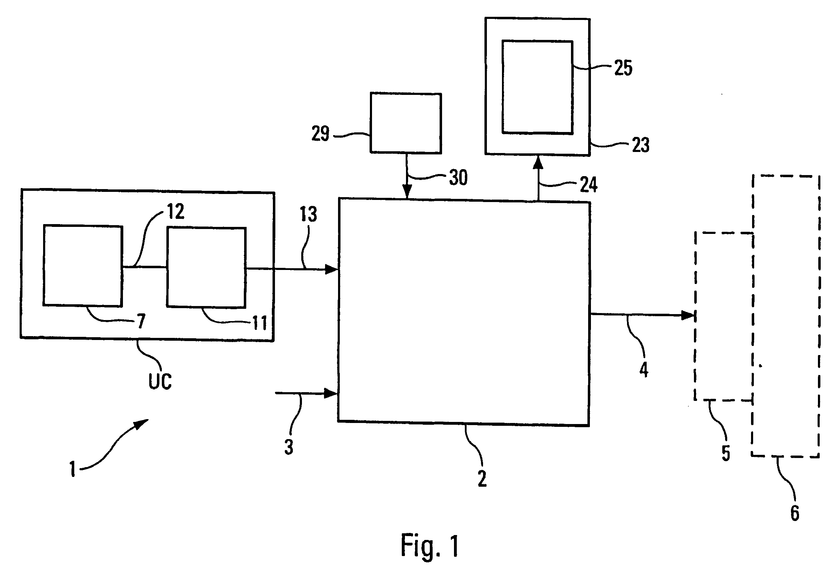

Le dispositif 1 conforme à l'invention et représenté schématiquement sur la figure 1 est destiné à guider automatiquement un aéronef A, en particulier un avion de transport militaire, pour un vol qui est au moins en partie à basse altitude.

Pour ce faire, ledit dispositif 1 comporte un système de guidage usuel 2 qui reçoit des informations notamment par l'intermédiaire d'une liaison 3 et qui est destiné à guider l'aéronef A le long d'une trajectoire de vol TO reçue. Ledit système de guidage 2 qui comporte par exemple un pilote automatique, détermine des ordres de pilotage de l'aéronef A, qui sont tels que ce dernier suit ladite trajectoire de vol TO. Ces ordres de pilotage sont transmis par une liaison 4 à des moyens d'actionnement 5 d'organes commandés 6 tels que, par exemple, des gouvernes (de direction, de profondeur, ...) de l'aéronef A, lesdits moyens d'actionnement 5 et lesdits organes de commande 6 étant représentés en traits interrompus sur la figure 1.

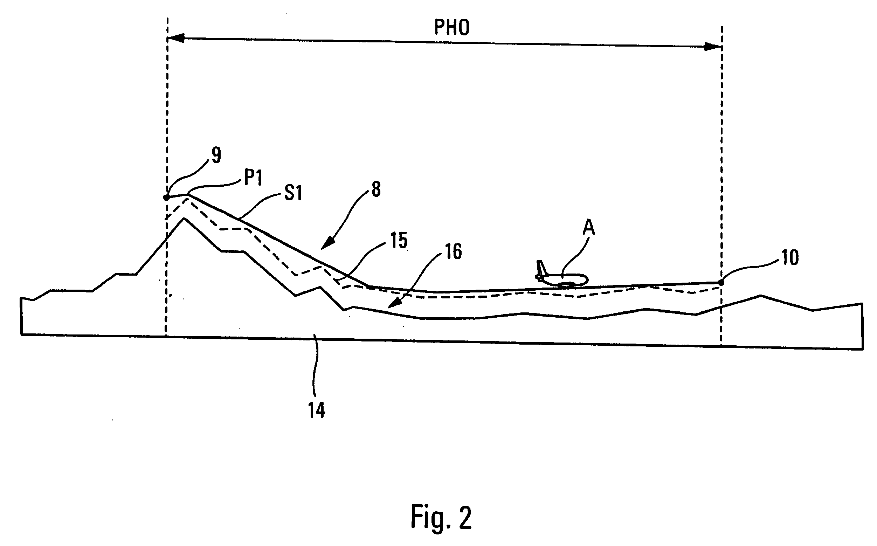

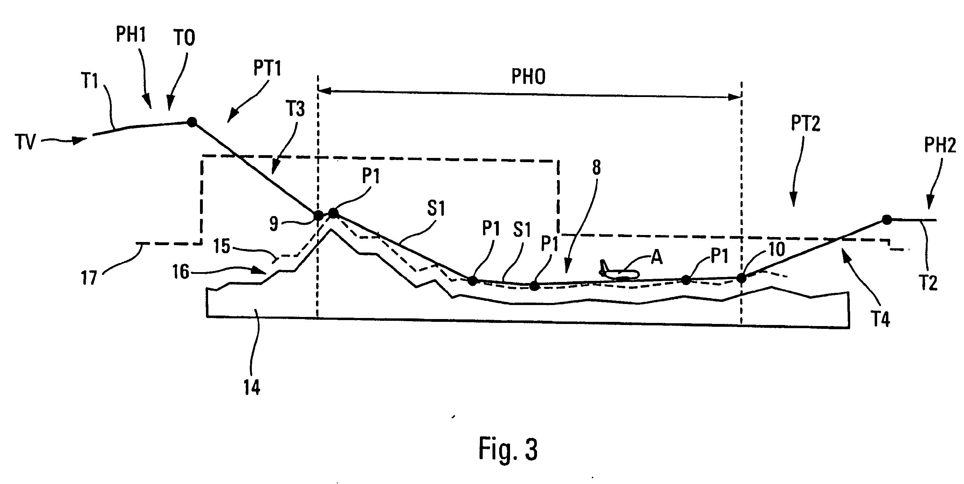

Selon l'invention, ledit dispositif 1 comporte, de plus :
- des moyens 7 pour déterminer au moins une section de trajectoire LLF 8, qui est représentée sur la figure 2, qui correspond à une partie de trajectoire à basse altitude permettant à l'aéronef A de suivre le terrain 14 survolé, qui est susceptible d'être volé par l'aéronef A et qui tient compte de prédictions de masse et de vitesse, ainsi que de prédictions de performances de montée et de descente de l'aéronef A. Ladite section de trajectoire LLF 8 comprend un point d'entrée 9 à son début et un point de sortie 10 à son autre extrémité ; et
- des moyens 11 qui sont reliés par une liaison 12 aux moyens 7, pour intégrer ladite section de trajectoire LLF 8 dans la trajectoire de vol TO, entre une première partie de trajectoire T1 correspondant à une première phase de vol PH1 (par exemple une phase de croisière) et une seconde partie de trajectoire T2 correspondant à une seconde phase de vol PH2 (par exemple également une phase de croisière), en prévoyant respectivement des première et seconde phases de transition PT1 et PT2 correspondant, respectivement, à une phase de capture et à une phase de sortie de ladite section de trajectoire LLF 8, comme représenté sur la figure 3. Ladite section de trajectoire LLF 8 de vol à basse altitude est donc située au niveau d'une phase intermédiaire PHO (de vol à basse altitude).

Dans un mode de réalisation particulier, lesdits moyens 7 et 11 sont regroupés dans une unité centrale UC qui est reliée par une liaison 13 audit système de guidage 2.

De plus, selon l'invention, ledit système de guidage 2 est formé de manière à guider automatiquement l'aéronef A de sorte que, successivement, il capture, suive et quitte ladite section de trajectoire LLF 8.

La trajectoire de vol TO comprend une trajectoire latérale TL définie dans un plan horizontal et comprenant des segments rectilignes S2 se rejoignant à des points de route P2 et une trajectoire verticale TV (ou profil de vol) définie dans un plan vertical. La section de trajectoire LLF 8 à basse altitude permet à l'aéronef A de suivre au plus près le terrain 14 survolé.

Dans un mode de réalisation préféré représenté sur les figures 2 et 3, ladite section de trajectoire LLF 8 comporte des segments rectilignes S1 se rejoignant à des points P1 dans le plan vertical.

Pour des raisons de sécurité, cette section de trajectoire LLF 8 est déterminée à partir d'un profil de terrain 15 qui est situé au-dessus du relief 16 du terrain 14. De plus, on a représenté en traits interrompus (notamment sur la figure 3) une courbe 17 présentant une pluralité d'altitudes différentes, chacune desdites altitudes correspondant à une altitude de sécurité, au-dessus de laquelle l'aéronef A ne risque aucune collision avec le terrain 14 survolé.

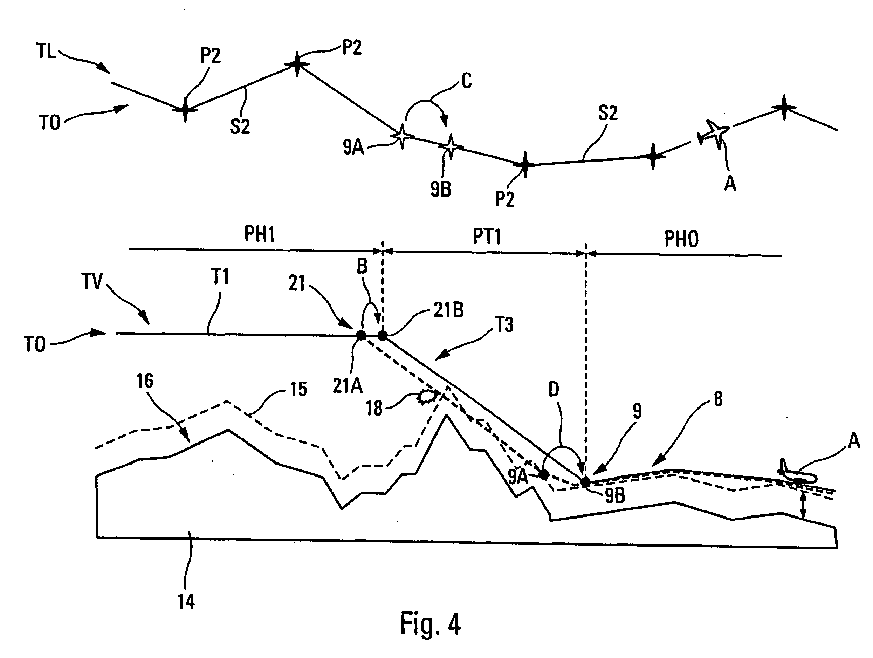

Dans le cadre de la présente invention, une section de trajectoire LLF 8 peut :
- soit être planifiée en préparation de mission, elle fait alors partie de la trajectoire de vol TO planifiée, comme représenté par exemple sur les figures 3 et 4 ;
- soit, sans avoir été planifiée initialement, être définie au cours du vol, sous forme d'une "section de trajectoire LLF d'opportunité".

Une section de trajectoire LLF 8 est le chemin le plus bas au-dessus du relief 16 du terrain 14, qui permet de passer au-dessus des crêtes les plus élevées entre les points d'entrée et de sortie 9 et 10, par rapport aux performances de montée et de descente prédites de l'aéronef A sur cette section de trajectoire LLF 8.

Concernant les phases de transition PT1 et PT2, la première phase PT1 est généralement une phase de descente et la seconde phase PT2 est généralement une phase de montée. Chacune desdites phases PT1 et PT2 comportant respectivement des trajectoires T3 et T4, peut être réalisée :
- soit, selon un segment rectiligne unique à pente constante, comme représenté par exemple sur la figure 3 ;
- soit, selon une pluralité de paliers horizontaux séparés par des pentes de montée ou de descente correspondantes. Ceci permet de minimiser la durée de montée ou de descente, en particulier lorsque l'environnement est dangereux.

Lorsque le point d'entrée 9 et l'angle de descente de la phase de transition de capture PT1 ne sont pas compatibles avec le profil de terrain 15, comme indiqué par un signe caractéristique 18 sur la figure 4 (mettant en évidence une interception du profil de terrain 15 par la trajectoire de capture T3 en pointillés), le dispositif 1 remet à jour un point de capture 21 (correspondant au début de la phase de capture PT1) qui est amené d'une position 21A à une position 21 B, comme illustré par une flèche B sur la figure 4. Ceci entraîne un déplacement du point d'entrée 9 entre une position 9A et une position 9B, comme illustré sur la trajectoire latérale TL (représentée sur la partie supérieure de la figure 4) par une flèche C et sur la trajectoire verticale TV (représentée sur la partie inférieure de la figure 4) par une flèche D.

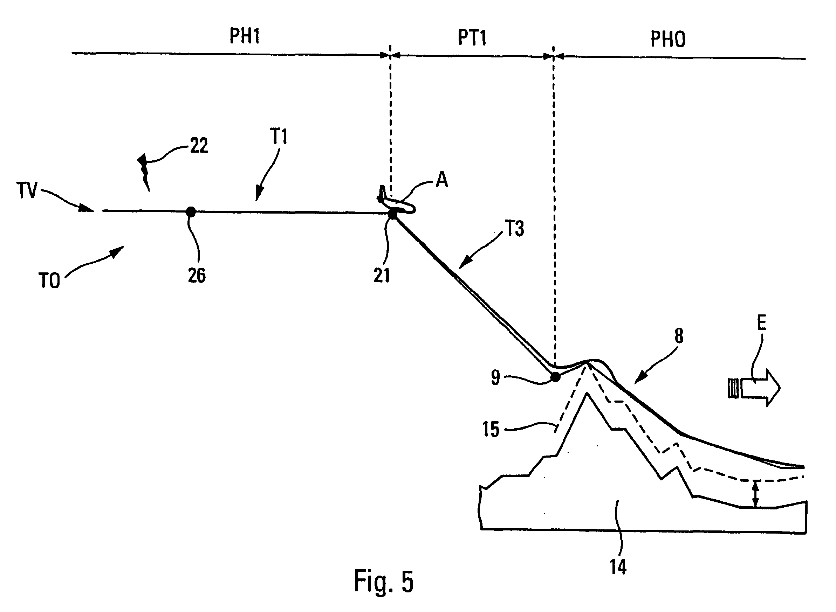

Dans un premier mode de réalisation représenté sur les figures 5 à 11, ladite section de trajectoire LLF 8 est planifiée et fait partie d'une trajectoire de vol TO planifiée notamment en préparation de mission (ou au cours du vol). Pour des raisons de clarification du dessin, la phase de vol PH1 est une phase de croisière, au cours de laquelle l'aéronef A est guidé à l'aide d'un mode de guidage usuel, guidant l'aéronef A :
- verticalement, conformément à une consigne d'altitude ; et
- latéralement, conformément à une consigne de route.

La manière d'engager le suivi de ladite section de trajectoire LLF 8 planifiée est illustrée :

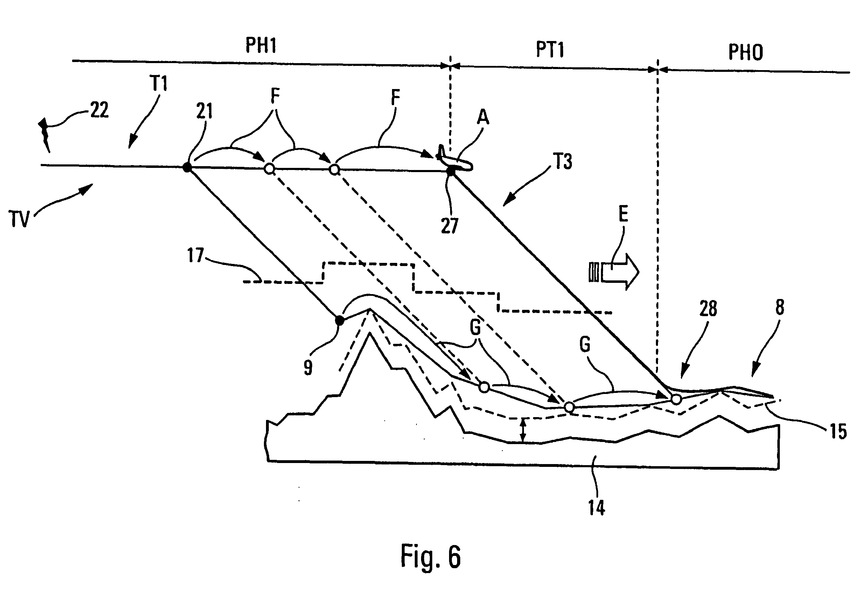

- sur les figures 5 et 6, pour un mode managé ; et

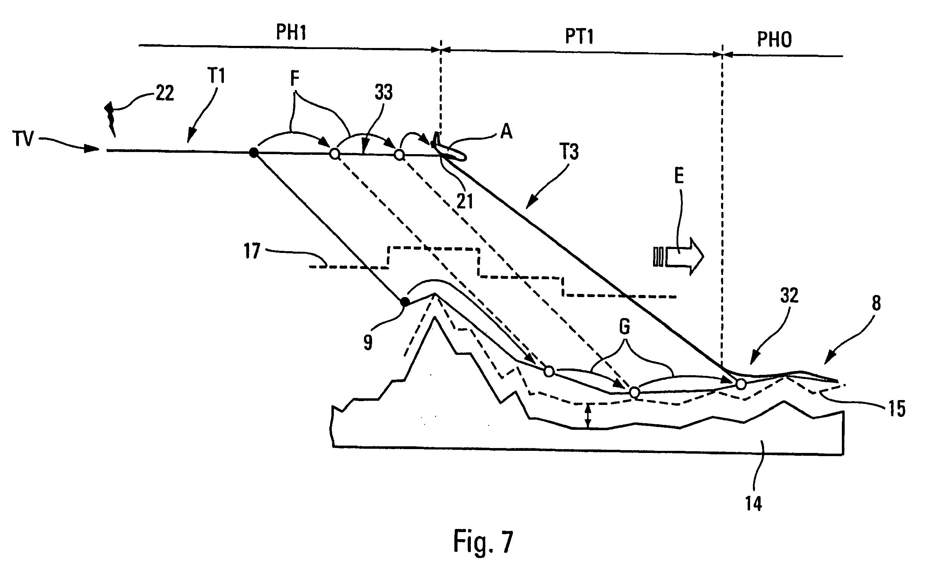

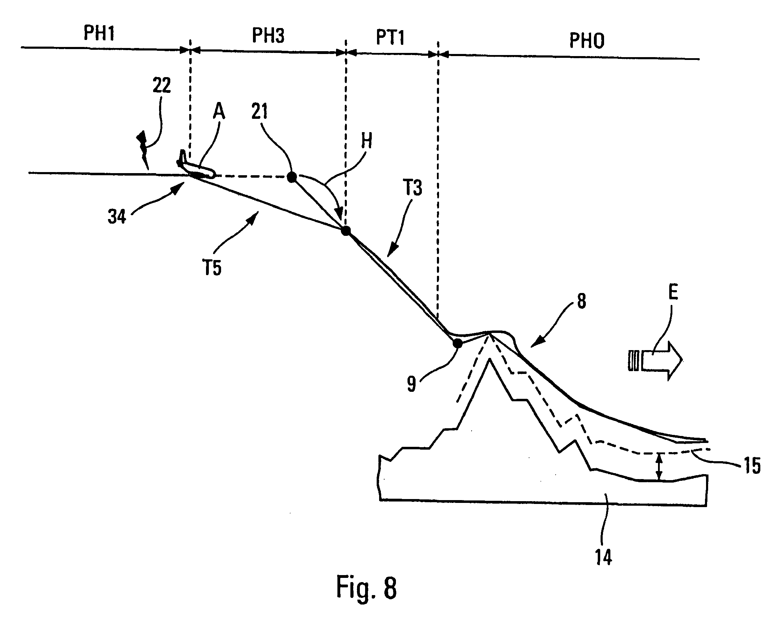

- sur les figures 7 et 8, pour un mode sélecté.

Dans un mode managé, lorsque l'aéronef A se trouve à une distance prédéterminée en amont du point de capture 21 correspondant au début de ladite phase de transition PT1 destinée à capturer la section de la trajectoire LLF 8, le dispositif 1 conforme à l'invention prévient le pilote de cette situation, comme illustré par un signe caractéristique 22 sur la figure 5, qui met en évidence cette distance prédéterminée par rapport audit point de capture 21. Dans ce cas, comme indiqué précédemment, l'aéronef A est guidé verticalement conformément à une consigne d'altitude.

Le dispositif 1 prévient le pilote à l'aide d'un moyen usuel 23 qui est par exemple relié par une liaison 24 audit système de guidage 2 et qui peut présenter des informations, de façon visuelle, par exemple sur un écran de visualisation 25, et/ou de façon sonore. Ledit moyen 23 indique également au pilote qu'il doit à présent armer un mode de guidage LLF comprenant, selon l'invention, un mode de capture automatique et un mode de suivi automatique, respectivement, pour capturer et suivre ladite section de trajectoire LLF 8.

Dans l'exemple représenté sur la figure 5, le pilote arme ledit mode de guidage LLF à un point 26, en amont dudit point de capture 21. Dans ce cas, ledit mode de guidage LLF est engagé automatiquement :
- en ce qui concerne la capture, audit point de capture 21, et ceci pendant toute la phase de transition PT1 ; et
- en ce qui concerne le suivi de la section de trajectoire LLF 8, lorsque ladite section de trajectoire LLF 8 est capturée, c'est-à-dire au point d'entrée 9 de cette dernière, et ceci pendant toute ladite phase de suivi PHO.

Ainsi, grâce à l'invention, lorsque le mode de guidage LLF est armé, il est engagé automatiquement lorsque les conditions de capture de la section de trajectoire LLF 8 sont réunies, c'est-à-dire audit point de capture 21. L'armement du mode de guidage LLF signifie que la descente suivante est une descente de capture de la section de trajectoire LLF 8. Cette phase de capture PT1 est présentée au pilote à l'aide du moyen 23. En outre, le mode de suivi de la trajectoire LLF 8 est engagé dès que les conditions de suivi sont réunies, c'est-à-dire audit point d'entrée 9.

En revanche, lorsque le pilote ou un membre d'équipage n'arme pas ledit mode de guidage LLF avant ledit ou audit point de capture 21, comme représenté sur la figure 6, l'aéronef A continue à voler dans le même mode, c'est-à-dire à la même altitude dans l'exemple représenté. Dans ce cas, l'aéronef A ne peut pas rejoindre la section de trajectoire LLF 8 audit point d'entrée 9. Cette situation est illustrée par le déplacement, suivant des flèches F du point de capture 21 (et de la trajectoire de descente T3), et suivant des flèches G du point d'entrée 9.

Lorsque le pilote arme ledit mode de guidage LLF à un point 27 en aval dudit point de capture 21, le mode de guidage LLF est alors engagé de suite automatiquement en ce qui concerne la capture. De plus, en ce qui concerne le suivi, ledit mode de guidage LLF est engagé automatiquement lorsque la section de trajectoire LLF 8 est capturée, à un point auxiliaire 28 qui est bien entendu situé sur ladite section de trajectoire LLF 8 en aval dudit point d'entrée 9 initial.

Ainsi, grâce à l'invention, l'engagement du mode de guidage LLF requiert un nombre d'actions limité de la part du pilote, à savoir simplement l'armement dudit mode de guidage LLF, à l'aide d'un moyen usuel 29 qui est par exemple relié par l'intermédiaire d'une liaison 30 audit système de guidage 2.

Dans un mode sélecté, pour engager le suivi de ladite section de trajectoire LLF 8 planifiée, le pilote choisit une loi de capture. L'exemple de la figure 7 relative à ce mode sélecté correspond à celui de la figure 6 relative au mode managé. La capture de la section de trajectoire LLF 8 est réalisée à l'aide de la loi de capture sélectionnée à partir du point 21. Dans ce cas, le dispositif 1 commute automatiquement dudit mode sélecté à un mode managé du type précité (le suivi étant alors réalisé à l'aide du mode de guidage LLF), en un point 32, lorsque l'aéronef A piloté suivant ladite loi de capture intercepte ladite section de trajectoire LLF 8 et que ledit mode de guidage LLF a été préalablement armé par le pilote, par exemple à un point 33. Par conséquent, le suivi de la section de trajectoire LLF 8 est réalisé selon un mode managé, de la manière précitée.

On notera que, dans le cadre de la présente invention, la descente, à partir du point de capture 21 pour aller capturer la section de trajectoire LLF 8, peut également être réalisée selon un mode de descente usuel (à pente et vitesse données), et ceci jusqu'à proximité de ladite section de trajectoire LLF 8. Pendant cette descente, ledit mode de descente usuel est engagé, mais le mode de guidage LLF n'est qu'armé. Lorsque l'aéronef arrive à proximité de ladite section de trajectoire LLF 8, la capture de cette dernière est réalisée par le mode de guidage LLF, puis l'aéronef est guidé suivant ladite section de trajectoire LLF 8.

En revanche, si la loi de capture est engagée en un point 34, avant le point de capture 21 (et que le mode de guidage LLF est armé), l'aéronef A est piloté suivant ladite loi de capture sélectionnée, comme illustré par une portion de trajectoire T5 sur la figure 8, de manière à créer une phase intermédiaire PH3. Dans une telle situation, le dispositif 1 commute automatiquement dudit mode sélecté à un mode managé, lorsque l'aéronef A intercepte ladite trajectoire de capture T3 de ladite phase de transition PT1 (ce qui entraîne un déplacement du point de capture 21, montré par une flèche H), comme illustré sur la figure 8, ou sinon lorsqu'il intercepte ladite section de trajectoire LLF 8. Ladite phase intermédiaire PH3 est donc située entre la phase de vol PH1 et la phase de capture PT1 qui correspond à la capture de la descente managée. Sur la figure 8, la fin de la phase de capture PT1 se situe un peu en amont du point d'entrée 9.

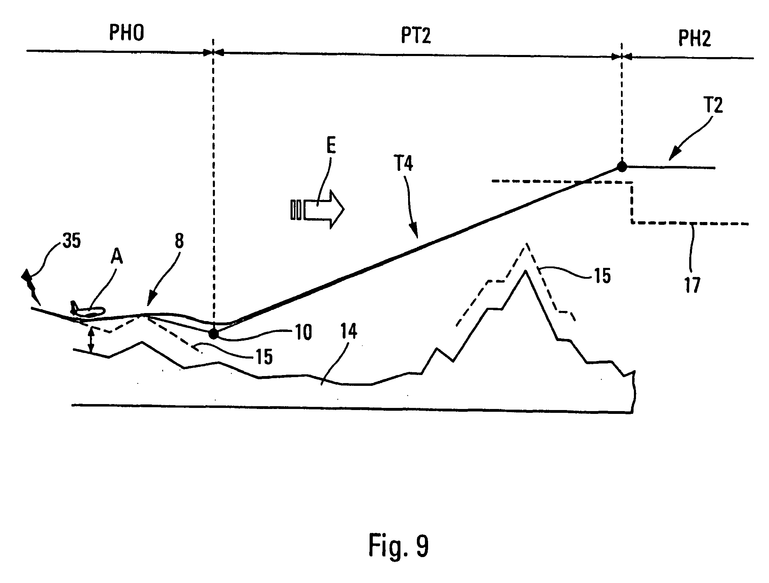

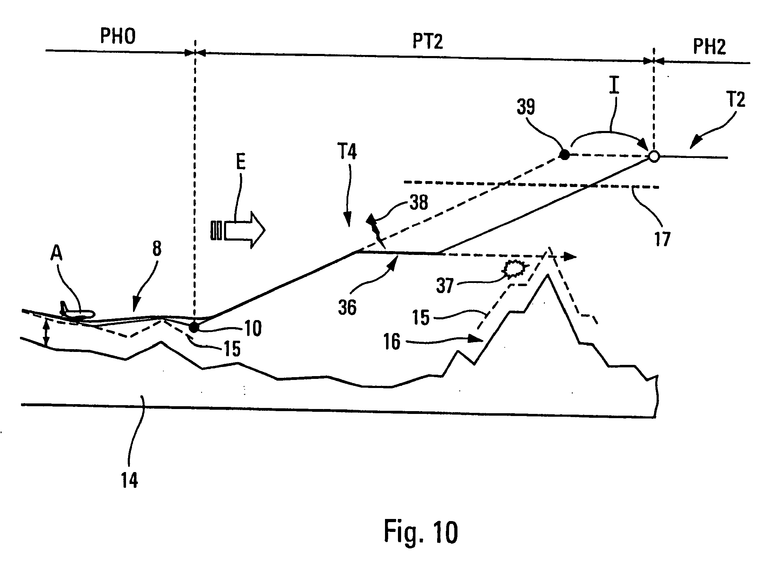

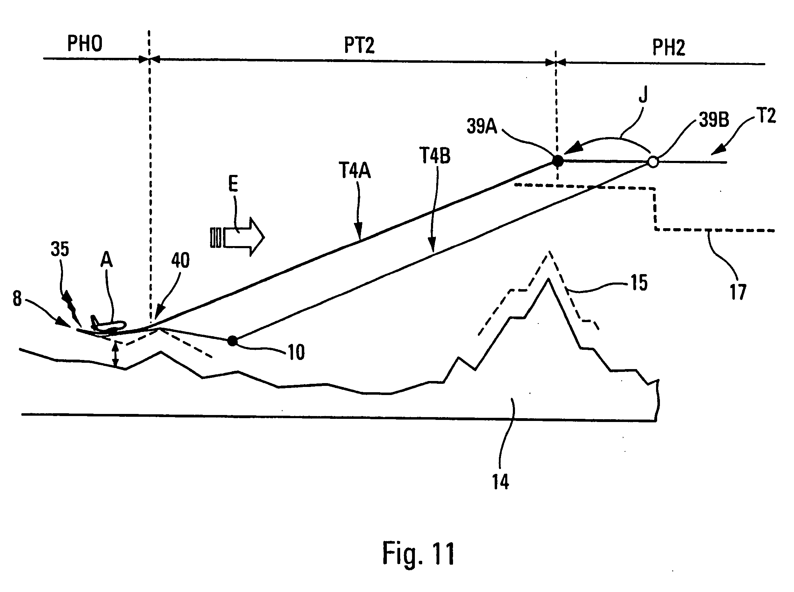

Par ailleurs, la sortie d'une section de trajectoire LLF 8 est illustrée :
- dans un mode managé, sur les figures 9 et 10 ; et
- dans un mode sélecté, sur la figure 11.

On suppose que l'aéronef A est guidé le long de la section de trajectoire LLF 8 à l'aide d'un mode de guidage LLF du type précité, dans un mode managé. Lorsque l'aéronef A atteint un point 35 qui se trouve à une distance prédéterminée en amont du point de sortie 10 correspondant à la fin de la section de trajectoire LLF 8, le dispositif 1 prévient le pilote, en particulier à l'aide du moyen 23, et l'invite à armer un mode de sortie (par exemple à l'aide du moyen 29) pour sortir automatiquement de ladite section de trajectoire LLF 8. Ledit mode de sortie est alors engagé automatiquement lorsque l'aéronef A arrive audit point de sortie 10. L'aéronef A est alors amené directement suivant la trajectoire T4 à une altitude prédéterminée correspondant à celle de la trajectoire T2 de la phase de vol PH2.

Ainsi, grâce à l'invention, et à la différence de solutions usuelles connues, la montée de l'aéronef A n'est pas immédiate, mais elle est retardée jusqu'audit point de sortie 10. C'est pourquoi le mode de sortie n'est pas engagé, mais uniquement armé par le pilote, et il est alors engagé automatiquement lorsque l'aéronef A arrive audit point de sortie 10.

Bien entendu, ladite trajectoire T4 de sortie peut être directe, comme représenté sur la figure 9. Elle peut toutefois également présenter des paliers horizontaux 36, comme représenté sur la figure 10. Toutefois, si un palier horizontal 36 ne permet pas une sortie en toute sécurité, et risque d'intercepter le profil de terrain 15, comme illustré par un signe caractéristique 37 sur la figure 10, le dispositif 1 conforme à l'invention émet une alarme, comme montré par un signe caractéristique 38.

Dans ce cas, le déplacement du point 39, illustré par une flèche I, n'est pas approprié de sorte qu'il est préférable de commander une montée directe.

Par ailleurs, pour quitter une section de trajectoire LLF 8, dans un mode sélecté, le pilote choisit une loi de sortie. Ainsi, le pilote peut anticiper une sortie de la section de trajectoire LLF 8, par exemple à un point 40 qui est situé en amont du point de sortie 10 sur la section de trajectoire LLF 8. On obtient ainsi une trajectoire de sortie T4A anticipée avec un point 39A de début de trajectoire T2, également anticipé, comme illustré par une flèche J, au lieu d'une trajectoire de sortie théorique T4B (en mode managé) avec un point 39B correspondant.

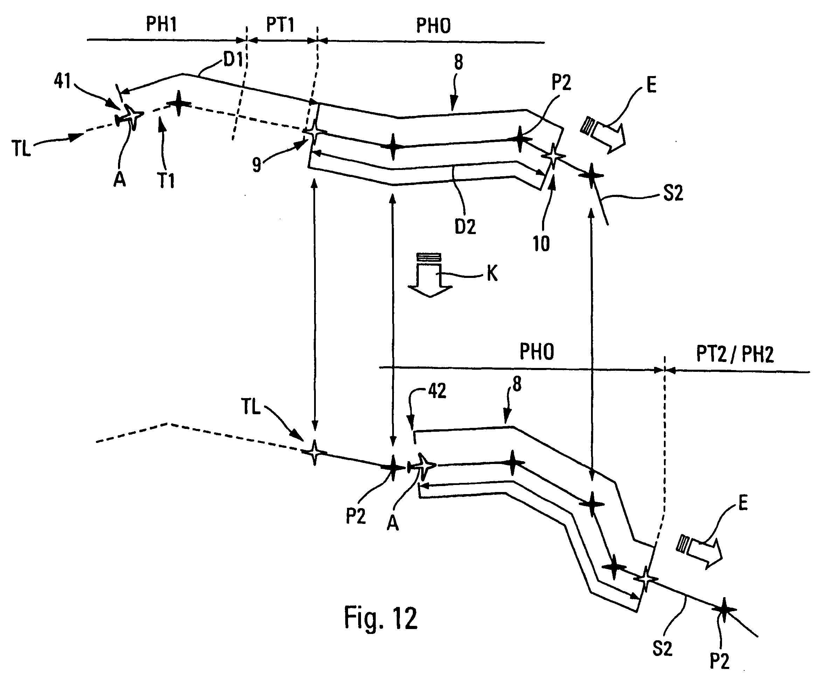

Par ailleurs, dans le mode de réalisation représenté sur les figures 12 à 14, aucune section de trajectoire LLF 8 n'a été planifiée en préparation de mission ou à bord de l'aéronef et n'est donc disponible lorsqu'un mode de guidage LLF est demandé par le pilote. L'aéronef A est supposé voler le long d'une partie de trajectoire de vol T1 relative à une phase de vol PH 1, notamment une phase de croisière à altitude élevée.

Pour des raisons opérationnelles, il peut arriver que l'équipage ait à faire descendre l'aéronef A et à le faire voler à basse altitude, mais n'ait pas le temps de planifier une section de trajectoire LLF 8. Dans ce cas, on propose les caractéristiques décrites ci-dessous.

Lorsqu'un pilote arme un mode de guidage LLF (à l'aide du moyen 29), alors qu'aucune section de trajectoire LLF 8 n'a été définie ou qu'une section de trajectoire LLF qui a été définie se trouve au loin, le dispositif 1 conforme à l'invention détermine automatiquement une section de trajectoire LLF 8 et la présente au pilote par l'intermédiaire du moyen 23, et ceci aussi rapidement que possible dès l'armement dudit mode de guidage LLF.

Comme aucun point d'entrée 9 ou de sortie 10 n'a été défini, la section de trajectoire LLF 8 correspondante (dite "d'opportunité") est calculée à l'avant de la position actuelle de l'aéronef A, comme suit :
- le point d'entrée 9 de cette section de trajectoire LLF 8 est situé à une distance D1 prédéterminée à l'avant de la position actuelle 41 de l'aéronef A, comme représenté sur la figure 12. La distance D1 est la plus petite possible. Elle dépend des capacités de calcul du dispositif 1 ; et
- le point de sortie 10 de cette section de trajectoire LLF 8 est situé à une distance D2 prédéterminée à l'avant dudit point d'entrée 9. La distance D2 peut correspondre notamment à une durée de vol prédéterminée, par exemple à cinq minutes de vol.

La section de trajectoire LLF 8 présente donc une distance D2.

De plus :
- la pente de chacune des phases de transition PT1, PT2 qui sont à pente constante, correspond à une pente prédéterminée, qui est toutefois modifiable par un pilote de l'aéronef A, par exemple à l'aide d'un moyen intégré non représenté ; et
- la vitesse de l'aéronef A le long de la section de trajectoire LLF 8 correspond à une vitesse prédéterminée, qui est également modifiable par un pilote de l'aéronef A.

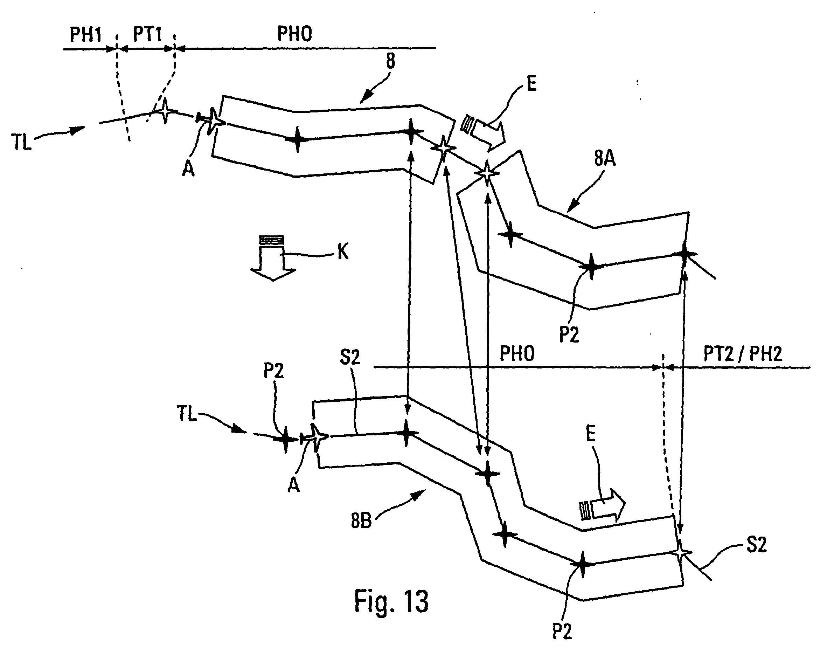

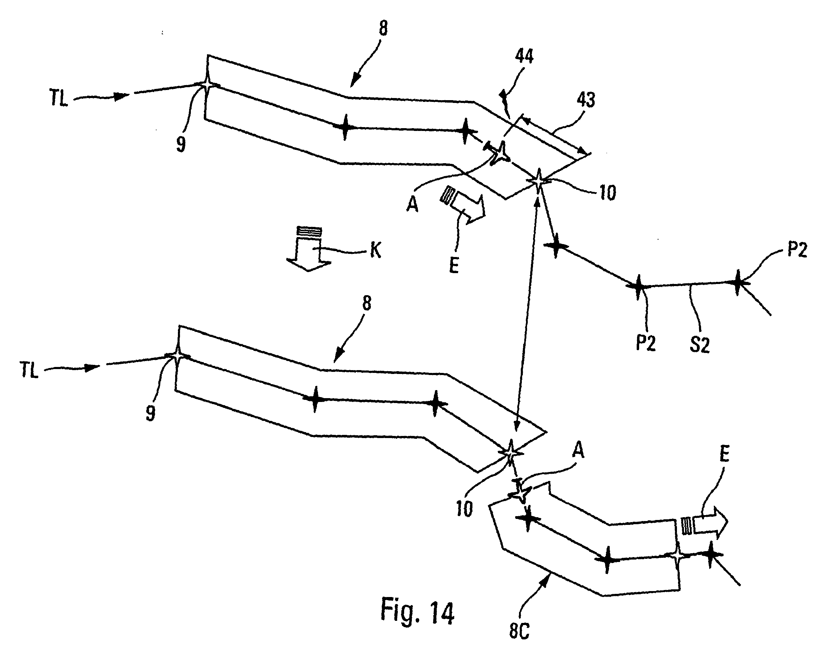

Selon l'invention, ladite section de trajectoire LLF 8 d'opportunité et ledit point de sortie 10 sont modifiés en permanence de manière à se déplacer avec l'aéronef A, à l'avant de la position 42 (mobile) dudit aéronef A, à la même vitesse, comme illustré sur la figure 12 entre un premier moment représenté sur la partie supérieure de ladite figure 12 et un second moment ultérieur représenté sur la partie inférieure de ladite figure 2. L'écoulement de temps entre ces deux moments est illustré par une flèche K. On notera que les figures 13 et 14 sont formées sur le même principe.

Par ailleurs, si ladite section de trajectoire LLF 8 d'opportunité (de longueur D2) qui se déplace à l'avant de la position actuelle de l'aéronef A, rencontre une section de trajectoire LLF auxiliaire 8A (de longueur D2A), qui a été planifiée (par exemple en préparation de mission) de la manière précitée, le dispositif 1 conforme à l'invention fusionne ces deux sections de trajectoire 8 et 8A pour former une seule section de trajectoire LLF globale 8B (de longueur D2B : D2B = D2 + D2A), comme illustré sur la figure 13. Ceci évite à l'aéronef A d'avoir à réaliser une manoeuvre complexe et risquée de montée et de descente entre les deux sections de trajectoire LLF 8 et 8A. La section de trajectoire LLF globale 8B est bien entendu déterminée de la même manière qu'une section de trajectoire LLF 8 précitée.

Par ailleurs, dans le cas où l'aéronef A est guidé le long d'une section de trajectoire LLF 8 planifiée et qu'il s'approche du point de sortie 10 (d'une distance prédéterminée 43), l'équipage est prévenu (indication 44) et il doit armer le mode de sortie pour quitter ladite section de trajectoire LLF 8 audit point de sortie 10, dans le mode managé. Si l'équipage n'arme pas ce mode de sortie, l'aéronef A continue à voler à basse altitude jusqu'audit point de sortie 10 où le mode de guidage LLF (mode de suivi de la section de trajectoire LLF 8) est alors désengagé. Par conséquent, si aucune action n'est prise, la situation devient dangereuse. Toutefois, l'équipage peut vouloir continuer à voler à basse altitude, sans utiliser de section de trajectoire LLF 8 planifiée (en préparation de mission ou à bord de l'aéronef).

Pour résoudre ce problème, le dispositif 1 conforme à l'invention calcule automatiquement à la fin de la section de trajectoire LLF 8 planifiée, une section de trajectoire LLF 8C d'opportunité, permettant ainsi à l'aéronef A de continuer à voler à basse altitude après ledit point 10.

## Revendications

1. Procédé de guidage automatique d'un aéronef (A), pour un vol au moins en partie à basse altitude, procédé selon lequel :
a) on détermine au moins une section de trajectoire LLF (8) correspondant à une partie de trajectoire à basse altitude qui permet de suivre le terrain (14) survolé, qui est susceptible d'être volée par l'aéronef (A) et qui tient compte de prédictions de masse et de vitesse, ainsi que de prédictions de performances de montée et de descente de l'aéronef (A), ladite section de trajectoire LLF (8) comprenant un point d'entrée (9) et un point de sortie (10) ;
b) on intègre ladite section de trajectoire LLF (8) entre une première partie de trajectoire (T1) correspondant à une première phase de vol (PH1) et une seconde partie de trajectoire (T2) correspondant à une seconde phase de vol (PH2), en prévoyant respectivement des première et seconde phases de transition (PT1, PT2) ; et
c) on guide automatiquement l'aéronef (A) de manière à ce que, successivement, il capture, suive et quitte ladite section de trajectoire LLF (8).

2. Procédé selon la revendication 1,
**caractérisé en ce qu'**au moins l'une desdites phases de transition (PT1, PT2) correspond à une transition à pente constante.

3. Procédé selon la revendication 1,
**caractérisé en ce qu'**au moins l'une desdites phases de transition (PT1, PT2) correspond à une transition présentant une pluralité de paliers horizontaux (36).

4. Procédé selon l'une quelconque des revendications 1 à 3, **caractérisé en ce que** l'on met à jour automatiquement un point de capture (21) correspondant au début de ladite première phase de transition (PT1) destinée à capturer ladite section de trajectoire LLF (8).

5. Procédé selon l'une quelconque des revendications 1 à 4, **caractérisé en ce que** ladite section de trajectoire LLF (8) est planifiée et fait partie d'une trajectoire de vol (TO) planifiée.

6. Procédé selon la revendication 5,
**caractérisé en ce que**, pour engager le suivi de ladite section de trajectoire LLF (8) planifiée, dans un mode managé, on prévient le pilote lorsque l'aéronef (A) se trouve à une distance prédéterminée en amont d'un point de capture (21) correspondant au début de ladite première phase de transition (PT1) destinée à capturer ladite section de trajectoire LLF (8), et on l'invite alors à armer un mode de guidage LLF comprenant un mode de capture automatique et un mode de suivi automatique, respectivement, pour capturer et suivre ladite section de trajectoire LLF (8).

7. Procédé selon la revendication 6,
**caractérisé en ce que** :
a) si le pilote arme ledit mode de guidage LLF avant que l'aéronef (A) atteigne ledit point de capture (21), ledit mode de guidage LLF est engagé automatiquement en ce qui concerne la capture audit point de capture (21), et en ce qui concerne le suivi lorsque la section de trajectoire LLF (8) est capturée, au point d'entrée (9) de ladite section de trajectoire LLF (8) ; et
b) si le pilote arme ledit mode de guidage LLF à un premier point auxiliaire (27) en aval dudit point de capture (21), l'engagement dudit mode de guidage LLF est retardé jusqu'audit premier point auxiliaire (27), auquel il est alors engagé automatiquement en ce qui concerne la capture, et en ce qui concerne le suivi il est engagé automatiquement lorsque la section de trajectoire LLF (8) est capturée, à un second point auxiliaire (28) situé sur ladite section de trajectoire LLF (8) en aval dudit point d'entrée (9).

8. Procédé selon la revendication 7,
**caractérisé en ce que**, dans le cas b), on indique à un pilote de l'aéronef (A) ledit second point auxiliaire (28).

9. Procédé selon l'une des revendications 6 à 8,
**caractérisé en ce que**, pour quitter une section de trajectoire LLF (8), dans un mode managé, on prévient le pilote lorsque l'aéronef (A) se trouve à une distance prédéterminée en amont du point de sortie (10) correspondant à la fin de la section de trajectoire LLF (8), et on l'invite alors à armer un mode de sortie pour sortir automatiquement de ladite section de trajectoire LLF (8), ledit mode de sortie étant engagé automatiquement lorsque l'aéronef (A) arrive audit point de sortie (10).

10. Procédé selon la revendication 9,
**caractérisé en ce que** ledit mode de sortie met en oeuvre une sortie à paliers horizontaux (36) et **en ce que**, lorsqu'un palier horizontal (36) de ladite sortie à paliers horizontaux est incompatible avec un profil du terrain (15), on émet un signal d'alarme (38).

11. Procédé selon la revendication 5,
**caractérisé en ce que**, pour engager le suivi de ladite section de trajectoire LLF (8) planifiée, dans un mode sélecté, le pilote choisit une loi de capture.

12. Procédé selon la revendication 11,
**caractérisé en ce que** l'on commute automatiquement dudit mode sélecté à un mode managé, lorsque l'aéronef (A) piloté suivant ladite loi de capture intercepte ladite première phase de transition de capture (PT1) ou ladite section de trajectoire LLF (8).

13. Procédé selon l'une des revendications 11 et 12,
**caractérisé en ce que**, pour quitter une section de trajectoire LLF (8), dans un mode sélecté, le pilote choisit une loi de sortie.

14. Procédé selon l'une quelconque des revendications 1 à 4, **caractérisé en ce que** ladite section de trajectoire LLF (8) est déterminée automatiquement au cours d'un vol de l'aéronef (A).

15. Procédé selon la revendication 14,
**caractérisé en ce que** :
- ledit point d'entrée (9) de la section de trajectoire LLF (8) est situé à une distance prédéterminée (D1) à l'avant de la position actuelle (41) de l'aéronef (A) ; et
- ledit point de sortie (10) de la section de trajectoire LLF (8) est situé à une distance prédéterminée (D2) à l'avant dudit point d'entrée (9).

16. Procédé selon l'une des revendications 14 et 15,
**caractérisé en ce que** la pente d'une phase de transition (PT1, PT2) à pente constante correspond à une pente prédéterminée, qui est modifiable par un pilote de l'aéronef (A).

17. Procédé selon l'une des revendications 14 à 16,
**caractérisé en ce que** la vitesse de l'aéronef (A) le long de la section de trajectoire LLF (8) correspond à une vitesse prédéterminée, qui est modifiable par un pilote de l'aéronef (A).

18. Procédé selon l'une quelconque des revendications 14 à 17,
**caractérisé en ce que** ladite section de trajectoire LLF (8) et ledit point de sortie (10) sont modifiés en permanence de manière à se déplacer avec l'aéronef (A), à l'avant de la position (42) dudit aéronef (A).

19. Procédé selon la revendication 18,
**caractérisé en ce que**, si ladite section de trajectoire LLF (8) qui se déplace rencontre une section de trajectoire LLF auxiliaire (8A), planifiée en préparation de mission, on fusionne ces deux sections de trajectoire LLF (8, 8A) pour former une seule section de trajectoire LLF globale (8B).

20. Procédé selon l'une quelconque des revendications 14 à 19,
**caractérisé en ce que** ladite première partie de trajectoire est une section de trajectoire LLF auxiliaire, qui a été planifiée en préparation de mission.

21. Procédé selon l'une quelconque des revendications 1 à 20,
**caractérisé en ce que** lesdites première et seconde parties de trajectoire (T3, T4) sont des parties d'une trajectoire de vol (TO) planifiée.

22. Procédé selon l'une quelconque des revendications 1 à 20,
**caractérisé en ce qu'**au moins l'une desdites première et seconde parties de trajectoire est une trajectoire de capture d'une trajectoire de vol à basse altitude planifiée.

23. Dispositif de guidage automatique d'un aéronef, pour un vol au moins en partie à basse altitude, ledit dispositif (1) comportant :
- des moyens (7) pour déterminer au moins une section de trajectoire LLF (8) correspondant à une partie de trajectoire à basse altitude, qui permet de suivre le terrain (14) survolé, qui est susceptible d'être volée par l'aéronef (A) et qui tient compte de prédictions de masse et de vitesse, ainsi que de prédictions de performances de montée et de descente de l'aéronef (A) ;
- des moyens (11) pour intégrer ladite section de trajectoire LLF (8) dans une trajectoire de vol (TO), entre une première partie de trajectoire T1) correspondant à une première phase de vol (PH1) et une seconde partie de trajectoire (T2) correspondant à une seconde phase de vol (PH2), en prévoyant respectivement des première et seconde phases de transition (PT1, PT2) ; et
- des moyens (2) pour guider automatiquement l'aéronef (A) de manière à ce que, successivement, il capture, suive et quitte ladite section de trajectoire LLF (8).

24. Aéronef,
**caractérisé en ce qu'**il comporte un dispositif (1) tel que celui spécifié sous la revendication 23.

## Claims

1. A method of automatic guidance of an aircraft (A), for a flight at least in part at low altitude, according to which:
a) at least one LLF trajectory section (8) corresponding to a low altitude trajectory part which makes it possible to follow the terrain (14) overflown, which is able to be flown by the aircraft (A) and which takes account of predictions of mass and of speed, as well as of predictions of climb and descent performance of the aircraft (A) are determined, said LLF trajectory section (8) comprising an entry point (9) and an exit point (10);
b) said LLF trajectory section (8) is integrated between a first trajectory part (T1) corresponding to a first phase of flight (PH1) and a second trajectory part (T2) corresponding to a second phase of flight (PH2), by providing respectively first and second transition phases (PT1, PT2); and
c) the aircraft (A) is guided automatically in such a way that, successively, it captures, follows and leaves said LLF trajectory section (8).

2. The method as claimed in claim 1,
**characterized in that** at least one of said transition phases (PT1, PT2) corresponds to a transition at constant slope.

3. The method as claimed in claim 1,
**characterized in that** at least one of said transition phases (PT1, PT2) corresponds to a transition exhibiting a plurality of horizontal levels (36).

4. The method as claimed in any one of claims 1 to 3,
**characterized in that** a capture point (21) corresponding to the start of said first transition phase (PT1) intended to capture said LLF trajectory section (8) is updated automatically.

5. The method as claimed in any one of claims 1 to 4, **characterized in that** said LLF trajectory section (8) is planned and forms parts of a planned flight trajectory (TO).

6. The method as claimed in claim 5,
**characterized in that**, to engage the following of said planned LLF trajectory section (8) in a managed mode, the pilot is forewarned when the aircraft (A) is a predetermined distance upstream of a capture point (21) corresponding to the start of said first transition phase (PT1) intended to capture said LLF trajectory section (8), and he is then invited to enable an LLF guidance mode comprising an automatic capture mode and an automatic following mode, respectively, for capturing and following said LLF trajectory section (8) .

7. The method as claimed in claim 6,
**characterized in that**:
a) if the pilot enables said LLF guidance mode before the aircraft (A) reaches said capture point (21), said LLF guidance mode is engaged automatically as regards capture at said capture point (21), and as regards following when the LLF trajectory section (8) is captured, at the entry point (9) of said LLF trajectory section (8); and
b) if the pilot enables said LLF guidance mode at a first auxiliary point (27) downstream of said capture point (21), the engagement of said LLF guidance mode is delayed until said first auxiliary point (27), at which it is then engaged automatically as regards capture, and as regards following it is engaged automatically when the LLF trajectory section (8) is captured, at a second auxiliary point (28) situated on said LLF trajectory section (8) downstream of said entry point (9) .

8. The method as claimed in claim 7,
**characterized in that**, in case b), said second auxiliary point (28) is indicated to a pilot of the aircraft (A).

9. The method as claimed in one of claims 6 to 8,
**characterized in that**, to leave an LLF trajectory section (8), in a managed mode, the pilot is forewarned when the aircraft (A) is a predetermined distance upstream of the exit point (10) corresponding to the end of the LLF trajectory section (8), and he is then invited to enable an exit mode for automatically exiting said LLF trajectory section (8), said exit mode being engaged automatically when the aircraft (A) arrives at said exit point (10).

10. The method as claimed in claim 9,
**characterized in that** said exit mode implements an exit with horizontal levels (36) and **in that**, when a horizontal level (36) of said exit with horizontal levels is incompatible with a profile of the terrain (15) an alarm signal (38) is emitted.

11. The method as claimed in claim 5,
**characterized in that**, to engage the following of said planned LLF trajectory section (8), in a selected mode, the pilot chooses a capture law.

12. The method as claimed in claim 11,
**characterized in that** there is an automatic switch from said selected mode to a managed mode when the aircraft (A) piloted according to said capture law intercepts said first capture transition phase (PT1) or said LLF trajectory section (8).

13. The method as claimed in one of claims 11 and 12,
**characterized in that**, to leave an LLF trajectory section (8), in a selected mode, the pilot chooses an exit lazy.

14. The method as claimed in any one of claims 1 to 4,
**characterized in that** said LLF trajectory section (8) is determined automatically during a flight of the aircraft (A).

15. The method as claimed in claim 14,
**characterized in that**:
- said entry point (9) of the LLF trajectory section (8) is situated a predetermined distance (D1) ahead of the current position (41) of the aircraft (A); and
- said exit point (10) of the LLF trajectory section (8) is situated a predetermined distance (D2) ahead of said entry point (9).

16. The method as claimed in one of claims 14 and 15,
**characterized in that** the slope of a transition phase (PT1, PT2) at constant slope corresponds to a predetermined slope, which is modifiable by a pilot of the aircraft (A).

17. The method as claimed in one of claims 14 to 16,
**characterized in that** the speed of the aircraft (A) along the LLF trajectory section (8) corresponds to a predetermined speed, which is modifiable by a pilot of the aircraft (A).

18. The method as claimed in any one of claims 14 to 17,
**characterized in that** said LLF trajectory section (8) and said exit point (10) are modified continuously in such a way that they displace together with the aircraft (A), ahead of the position (42) of said aircraft (A).

19. The method as claimed in claim 18,
**characterized in that**, if said LLF trajectory section (8) which is displacing encounters an auxiliary LLF trajectory section (8A), planned during mission preparation, these two LLF trajectory sections (8, 8A) are merged to form a single overall LLF trajectory section (8B).

20. The method as claimed in any one of claims 14 to 19,
**characterized in that** said first trajectory part is an auxiliary LLF trajectory section, which has been planned during mission preparation.

21. The method as claimed in any one of claims 1 to 20,
**characterized in that** said first and second trajectory parts (T3, T4) are parts of a planned flight trajectory (TO).

22. The method as claimed in any one of claims 1 to 20,
**characterized in that** at least one of said first and second trajectory parts is a planned low altitude flight trajectory capture trajectory.

23. A device for automatic guidance of an aircraft, for a flight at least in part at low altitude, said device (1) comprising:
- means (7) for determining at least one LLF trajectory section (8) corresponding to a low altitude trajectory part, which makes it possible to fellow the terrain (14) overflow, which is able to be flown by the aircraft (A) and which takes account of predictions of mass and of speed, as well as predictions of climb and descent performance of the aircraft (A);
- means (11) for integrating said LLF trajectory section (8) in a flight trajectory (TO), between a first trajectory part (T1) corresponding to a first phase of flight (PH1) and a second trajectory part (T2) corresponding to a second phase of flight (PH2), by providing respectively first and second transition phases (PT1, PT2); and
- means (2) for automatically guiding the aircraft (A) in such a way that, successively, it captures, follows and leaves said LLF trajectory section (8).

24. An aircraft,
**characterized in that** it comprises a device (1) such as that specified under claim 23.

## Patentansprüche

1. Automatisches Leitverfahren für ein Luftfahrzeug (A), für einen zumindest teilweise in geringer Höhe stattfindenden Flug, ein Verfahren, bei dem:
a) man zumindest einen Flugbahnabschnitt LLF (8) bestimmt, der einem Teil der Flugbahn in geringer Höhe entspricht, mit dem man das überflogene Gelände (14) verfolgen kann, und der vom Luftfahrzeug (A) beflogen werden kann, und Masse- und Geschwindigkeitsvorhersagen ebenso berücksichtigt, wie Vorhersagen über die Steig- und Sinkleistungen des Luftfahrzeugs (A), wobei der besagte Flugbahnabschnitt LLF (8) einen Eintrittspunkt (9) und einen Austrittspunkt (10) umfasst;
b) man den besagten Flugbahnabschnitt LLF (8) zwischen einem ersten Teil der Flugbahn (T1) entsprechend einer ersten Flugphase (PH1) und einem zweiten Teil der Flugbahn (T2) entsprechend einer zweiten Flugphase (PH2) integriert, und dabei jeweils erste und zweite Übergangsphasen (PT1, PT2) vorsieht; und
c) man das Luftfahrzeug (A) automatisch so leitet, dass es den besagten Flugbahnabschnitt LLF (8) nach und nach erfasst, verfolgt und verlässt.

2. Verfahren nach Anspruch 1,
**dadurch gekennzeichnet, dass** zumindest eine der besagten Übergangsphasen (PT1, PT2) einem Übergang mit konstanter Neigung entspricht.

3. Verfahren nach Anspruch 1,
**dadurch gekennzeichnet, dass** zumindest eine der besagten Übergangsphasen (PT1, PT2) einem Übergang mit einer Vielzahl an horizontalen Absätzen (36) entspricht.

4. Verfahren nach irgendeinem der Ansprüche 1 bis 3,
**dadurch gekennzeichnet, dass** man einen Erfassungspunkt (21) entsprechend dem Beginn der besagten ersten Übergangsphase (PT1), die dazu bestimmt ist, den besagten Flugbahnabschnitt LLF (8) zu erfassen, automatisch aktualisiert.

5. Verfahren nach irgendeinem der Ansprüche 1 bis 4,
**dadurch gekennzeichnet, dass** der besagte Flugbahnabschnitt LLF (8) geplant ist, und zu einer geplanten Flugbahn (TO) gehört.

6. Verfahren nach Anspruch 5,
**dadurch gekennzeichnet, dass** man zum Starten der Verfolgung des besagten geplanten Flugbahnabschnitts LLF (8) in einem gemanagten Modus den Piloten verständigt, wenn sich das Luftfahrzeug (A) in einem vorbestimmten Abstand vor einem Erfassungspunkt (21) befindet, der dem Beginn der besagten ersten Übergangsphase (PT1) entspricht, die dazu bestimmt ist, den besagten Flugbahnabschnitt LLF (8) zu erfassen, und ihn also auffordert, einen Leitmodus LLF zu aktivieren, der einen automatischen Erfassungsmodus und einen automatischen Verfolgungsmodus umfasst, um den besagten Flugbahnabschnitt LLF (8) jeweils zu erfassen und zu verfolgen.

7. Verfahren nach Anspruch 6,
**dadurch gekennzeichnet, dass**:
a) wenn der Pilot den besagten Leitmodus LLF aktiviert, bevor das Luftfahrzeug (A) den besagten Erfassungspunkt (21) erreicht, der besagte Leitmodus LLF in Bezug auf die Erfassung beim besagten Erfassungspunkt (21) und in Bezug auf die Verfolgung, sobald der Flugbahnabschnitt LLF (8) erfasst worden ist, am Eintrittspunkt (9) des besagten Flugbahnabschnitts LLF (8) automatisch übernommen wird; und
b) wenn der Pilot den besagten Leitmodus LLF an einem ersten Hilfspunkt (27) nach dem besagten Erfassungspunkt (21) aktiviert, die Übernahme des besagten Leitmodus LLF bis zum besagten ersten Hilfspunkt (27) verzögert wird, bei dem er dann automatisch übernommen wird, was die Erfassung betrifft, und hinsichtlich der Verfolgung wird er dann automatisch übernommen, sobald der Flugbahnabschnitt LLF (8) an einem zweiten Hilfspunkt (28) erfasst worden ist, der sich auf dem besagten Flugbahnabschnitt LLF (8) nach dem besagten Eintrittspunkt (9) befindet.

8. Verfahren nach Anspruch 7,
**dadurch gekennzeichnet, dass** man einem Piloten des Luftfahrzeugs (A) den besagten zweiten Hilfspunkt (28) im Falle b) angibt.

9. Verfahren nach einem der Ansprüche 6 bis 8,
**dadurch gekennzeichnet, dass** man zum Verlassen eines Flugbahnabschnitts LLF (8) in einem gemanagten Modus den Piloten verständigt, wenn sich das Luftfahrzeug (A) in einem vorbestimmten Abstand vor dem Austrittspunkt (10) befindet, der dem Ende des Flugbahnabschnitts LLF (8) entspricht, und ihn auffordert, einen Austrittsmodus zu aktivieren, um den besagten Flugbahnabschnitt LLF (8) automatisch zu verlassen, wobei der besagte Austrittsmodus automatisch übernommen wird, wenn das Luftfahrzeug (A) am besagten Austrittspunkt (10) ankommt.

10. Verfahren nach Anspruch 9,
**dadurch gekennzeichnet, dass** der besagte Austrittsmodus einen Austritt mit horizontalen Absätzen (36) anwendet, und **dadurch**, dass, wenn ein horizontaler Absatz (36) des besagten Austritts mit horizontalen Absätzen nicht mit einem Geländeprofil (15) vereinbar ist, ein Alarmsignal (38) ausgegeben wird.

11. Verfahren nach Anspruch 5,
**dadurch gekennzeichnet, dass** der Pilot zur Übernahme der Verfolgung des besagten geplanten Flugbahnabschnitts LLF (8) in einem selektierten Modus ein Erfassungsgesetz auswählt.

12. Verfahren nach Anspruch 11,
**dadurch gekennzeichnet, dass** man automatisch vom besagten selektierten Modus in einen gemanagten Modus umschaltet, wenn das nach dem besagten Erfassungsgesetz gesteuerte Luftfahrzeug (A) die besagte erste Erfassungs-Übergangsphase (PT1) oder den besagten Flugbahnabschnitt LLF (8) abfängt.

13. Verfahren nach einem der Ansprüche 11 und 12,
**dadurch gekennzeichnet, dass** der Pilot zum Verlassen eines Flugbahnabschnitts LLF (8) in einem selektierten Modus ein Austrittsgesetz auswählt.

14. Verfahren nach irgendeinem der Ansprüche 1 bis 4,
**dadurch gekennzeichnet, dass** der besagte Flugbahnabschnitt LLF (8) automatisch im Laufe eines Fluges des Luftfahrzeugs (A) bestimmt wird.

15. Verfahren nach Anspruch 14,
**dadurch gekennzeichnet, dass**:
- sich der besagte Eintrittspunkt (9) des Flugbahnabschnitts LLF (8) in einem vorbestimmten Abstand (D1) vor der aktuellen Position (41) des Luftfahrzeugs (A) befindet; und
- sich der besagte Austrittspunkt (10) des Flugbahnabschnitts LLF (8) in einem vorbestimmten Abstand (D2) vor dem besagten Eintrittspunkt (9) befindet.

16. Verfahren nach irgendeinem der Ansprüche 14 und 15,
**dadurch gekennzeichnet, dass** die Neigung einer Übergangsphase (PT1, PT2) bei konstanter Neigung einer vorbestimmten Neigung entspricht, die durch einen Piloten des Luftfahrzeugs (A) verändert werden kann.

17. Verfahren nach einem der Ansprüche 14 bis 16,
**dadurch gekennzeichnet, dass** die Geschwindigkeit des Luftfahrzeugs (A) entlang des Flugbahnabschnitts LLF (8) einer vorbestimmten Geschwindigkeit entspricht, die durch einen Piloten des Luftfahrzeugs (A) verändert werden kann.

18. Verfahren nach irgendeinem der Ansprüche 14 bis 17,
**dadurch gekennzeichnet, dass** der besagte Flugbahnabschnitt LLF (8) und der besagte Austrittspunkt (10) permanent verändert werden, sodass sie sich gemeinsam mit dem Luftfahrzeug (A) vor der Position (42) des besagten Luftfahrzeugs (A) bewegen.

19. Verfahren nach Anspruch 18,
**dadurch gekennzeichnet, dass**, wenn sich der besagte sich bewegende Flugbahnabschnitt LLF (8) auf einen Hilfs-Flugbahnabschnitt LLF (8A) trifft, der bei der Vorbereitung der Mission geplant worden ist, man diese beiden Flugbahnabschnitte LLF (8, 8A) fusioniert, um einen globalen Flugbahnabschnitt LLF (8B) zu bilden.

20. Verfahren nach irgendeinem der Ansprüche 14 bis 19,
**dadurch gekennzeichnet, dass** der besagte erste Teil der Flugbahn ein Hilfs-Flugbahnabschnitt LLF ist, der bei der Vorbereitung der Mission geplant worden ist.

21. Verfahren nach irgendeinem der Ansprüche 1 bis 20,
**dadurch gekennzeichnet, dass** die besagten ersten und zweiten Teile der Flugbahn (T3, T4) Teile einer geplanten Flugbahn (TO) sind.

22. Verfahren nach irgendeinem der Ansprüche 1 bis 20,
**dadurch gekennzeichnet, dass** zumindest einer der besagten ersten und zweiten Teile der Flugbahn eine Erfassungsflugbahn einer geplanten Flugbahn für einen Flug in geringer Höhe ist.

23. Vorrichtung zur automatischen Leitung eines Luftfahrzeugs für einen zumindest teilweise in geringer Höhe stattfindenden Flug, wobei die besagte Vorrichtung (1) folgendes umfasst:
- Vorrichtungen (7) zur Bestimmung zumindest eines Flugbahnabschnitts LLF (8) entsprechend einem ersten Teil der Flugbahn in geringer Höhe, mit dem man das überflogene Gelände (14) verfolgen kann, und das vom Luftfahrzeug (A) beflogen werden kann, und Masse- und Geschwindigkeitsvorhersagen ebenso berücksichtigt, wie Vorhersagen über die Steig- und Sinkleistungen des Luftfahrzeugs (A);
- Vorrichtungen (11) zum Integrieren des besagten Flugbahnabschnitts LLF (8) in eine Flugbahn (TO) zwischen einem ersten Teil der Flugbahn (T1) entsprechend einer ersten Flugphase (PH1) und einem zweiten Teil der Flugbahn (T2) entsprechend einer zweiten Flugphase (PH2) unter Voraussicht von jeweils ersten und zweiten Übergangsphasen (PT1, PT2); und
- Vorrichtungen (2) zum automatischen Leiten des Luftfahrzeugs (A), damit es den besagten Flugbahnabschnitt LLF (8) nach und nach erfasst, verfolgt und verlässt.

24. Luftfahrzeug,
**dadurch gekennzeichnet, dass** es eine Vorrichtung (1) umfasst, wie sie im Anspruch 23 dargelegt ist.
